# EUROPEAN PATENT SPECIFICATION

(11) **EP 0 586 075 B1**
(45) Date of publication and mention of the grant of the patent: **03.03.1999**
(21) Application number: 93305820.8
(22) Date of filing: 23.07.1993
(51) Int. Cl.: H04R 1/02, H04R 1/06, H04B 3/54

(54) **Loudspeaker systems**
Lautsprechersysteme
Systèmes de haut-parleurs

(30) Priority: 03.09.1992 US 939793
(43) Date of publication of application: 09.03.1994
(73) Proprietor: SONY ELECTRONICS INC., Park Ridge, New Jersey 07656 (US)
(72) Inventor: Gioscia, Richard, Mahwah, New Jersey 07430 (US); Ichikawa, Kazuo, G Kanagawa-Ken 248 (JP)
(74) Representative: Cotter, Ivan John

(56) References cited:
- WO-A-84/01479
- WO-A-88/09589
- DE-U- 8 900 254
- US-A- 3 911 221
- US-A- 4 899 388

## Description

This invention relates to loudspeaker systems.

Ordinary high fidelity audio loudspeakers often require long lengths of electrical wire to connect the loudspeakers with the output of an audio amplifier. Once connected to the audio amplifier, the loudspeaker can only be placed as far from the audio amplifier as the length of electrical wire will allow. In order to avoid the unsightly appearance of the connecting electrical wires, efforts must generally be made to conceal these wires in some way. This may be done, for example, by fishing the wires through the existing walls or ceilings of a structure. Further, locations for placement of ordinary loudspeakers for optimum sound coverage of a listening area may be limited due to physical characteristics of the loudspeaker such as size.

As an example. an area in which the above limitations of ordinary loudspeakers present themselves is in high fidelity audio systems which incorporate enhanced spatial sound field capabilities such as so called "surround sound". In these types of audio systems loudspeakers or "surround" speakers are generally positioned at locations toward the rear of the listening area, substantially opposite the main loudspeakers located toward the front of the listening area, so as to be substantially behind the listening audience. These "surround" speakers provide audio information to the listening area and act in conjunction with the main audio loudspeakers to provide listeners with an enhanced aural perception or sensation. Once it has been determined where both main and surround loudspeakers will be placed, electrical wire is used to electrically connect these loudspeakers with the audio amplifier output. In order to avoid the unsightliness of having these electrical wires in plain view, steps must generally be taken to conceal them. In the case of an already existing structure, this may mean having to fish the electrical wires through the existing walls and ceilings. This can be very inconvenient and expensive. Further, depending on the physical characteristics of the loudspeakers, locations for placing these loudspeakers without cluttering the listening area may be very limited.

One way in which the above limitation of ordinary audio loudspeakers has been overcome is the use of "wireless" loudspeakers. Wireless loudspeakers eliminate the need for electrical wire to connect the output of an audio amplifier to the loudspeaker. In existing wireless loudspeaker systems, the audio output of an audio amplifier is converted to a wireless signal, most commonly infra-red or radio frequency. This wireless signal is then transmitted by a wireless transmitter unit to a wireless loudspeaker unit which is generally positioned at some location remote from the audio amplifier and wireless transmitter. The wireless loudspeaker unit receives the wireless signal via sensors or receivers which are responsive to the transmitted wireless signal. The wireless loudspeaker unit internally processes and amplifies the wireless signal so as to cause a loudspeaker to produce an audible output signal in accordance with the signal output of the audio amplifier. The internal circuitry of the wireless loudspeaker unit is generally powered by batteries which are most often housed within the wireless loudspeaker unit (US Patent US-A-4 899 388 discloses an arrangement using infra-red signals and battery powered wireless loudspeaker units). External power sources such as an AC to DC power adaptor or transformer, however, may also be connected to the wireless loudspeaker unit via an extemal power connector to power the circuitry of the wireless loudspeaker unit.

Examples of existing wireless loudspeaker systems include the Sony Model IFS-50K and Model IFS-20K Infrared Cordless Stereo Speaker Systems. These wireless loudspeaker systems include an audio-to-infrared modulator, an infrared emitter and two internally amplified remote loudspeaker units with infrared sensors or receivers. The audio-to-infrared modulator is connected to the output of an audio amplifier. Audio signals output by the audio amplifier are converted by the audio-to-infrared modulator and transmitted by the emitter to the remote speaker units as infrared signals in accordance with the output of the audio amplifier. The infrared sensors or receivers located on each of the remote loudspeaker units receive the infrared signal transmitted from the infrared emitter. The remote loudspeaker unit then internally converts the infrared signal back into an audio signal and amplifies it to a level sufficient to drive a loudspeaker diaphragm to produce an audible output. The internal circuitry of the loudspeaker unit is generally powered by batteries which are housed within the housing of the loudspeaker unit itself. As an alternative, however, power may be supplied to the loudspeaker unit via an AC to DC power adaptor or transformer.

Other types of existing wireless loudspeaker systems include the Recoton Model W200 Wireless Speaker System and Radio Shack Model 40-1360 amplified stereo Wireless Speaker System, as well as those loudspeaker systems disclosed in U.S. Patent Nos. 4,829,570 and 4,847,903 to Schotz, in which the output of an audio amplifier is converted to an FM signal which is transmitted to a remote wireless speaker unit via standard household AC wiring. In this type of wireless loudspeaker system, the wireless loudspeaker unit is electrically connected to the standard household AC power receptacle. The loudspeaker unit contains circuitry which demodulates the audio signal from the AC power line and processes and amplifies it so as to drive a loudspeaker diaphragm to produce an audible output in accordance with the signal output from the audio amplifier. The placement of this type of wireless loudspeaker unit is limited to an area close enough to an AC power receptacle that the loudspeaker unit may be connected thereto. A further type of wireless loudspeaker is disclosed in U.S. Patent No. 3,590,382 to Kenney.

The disadvantages of the above described types of wireless loudspeakers include unsightly power cords. Further, although the life of batteries generally used to power the internal circuitry of wireless speaker systems like the Sony Model IFS-50K is relatively lengthy, once the batteries are exhausted they must be replaced. Regular replacement of batteries can be inconvenient as well as expensive. Finally, locations for placement of these loudspeakers for optimum sound coverage of a listening area may be limited due to the physical size and characteristics of the loudspeaker.

Power distribution tracks are widely known and used in such applications as the popular lighting systems commonly known as "track lighting". One example of this type of popular lighting system is the Lightolier LYTESPAN TRACK SYSTEM. The power distribution tracks used in these types of lighting systems are generally mounted to a fixed structure such as a wall or ceiling and connected to an AC power source in the same manner as an ordinary lighting fixture would be. The power distribution tracks generally have recessed electrical conductors which are aligned parallel to and on opposite sides of a central channel which runs the length of the power distribution track and which are electrically connected to an AC power source. Other examples of power distribution tracks which are used in various commercial, industrial and consumer applications include those disclosed by U.S. Patent No. 3,596,226 to Meltzer and U.S. Patent Nos. 3,246,074 and 3,295,093 to Neuman.

Track lighting fixtures generally have connectors or fasteners which are used to attach the lighting fixture to the power distribution track. These connectors or fasteners generally allow the light fixture to be physically or mechanically engaged with the power distribution track. Further, these connectors generally have electrical contacts which physically and electrically engage with the recessed electrical conductors of the power distribution track. It is via the connection between the electrical contacts of the connector and electrical conductors of the power distribution track that AC power is supplied to power the track lighting fixture. In many track lighting systems, lighting fixtures are connected to a power distribution track by inserting a connector portion of a track lighting fixture into the recessed central channel of the power distribution track and rotating it so that the electrical contacts of the connector come into physical contact with the recessed electrical conductors of the electrical power distribution track. Electrical power is thereby provided to operate the electrical track lighting fixture. Once the track lighting fixture is connected to the electrical power distribution track it is thereby supported and held in a desired operating position. Track Lighting systems thus offer the advantage of having no exposed electrical wires and the flexibility of positioning a lighting fixture at any desired point along the span of the power distribution track and having it thereby supported in a desired operating position.

US Patent US-A-3 911 221 and German Utility Model DE-U-89 00 254 disclose loudspeaker systems in which a loudspeaker unit is mechanically and electrically engaged with a track.

According to the present invention there is provided a loudspeaker system comprising:
a modulator/transmitter for receiving an audio signal from an audio signal source, converting the audio signal into an infrared signal and transmitting the infrared signal:
a power distribution track comprising electrical conductors; and
a loudspeaker unit;
the loudspeaker unit having a connector with electrical contacts, which connector can be rotated with respect to the track at a desired position along the track to mechanically engage the loudspeaker unit with the track, and so support the loudspeaker unit in position, and also to electrically engage the electrical contacts of the loudspeaker unit with the electrical conductors of the track whereby the loudspeaker unit can be supplied with electrical power by the track; and
the loudspeaker unit also having an infrared sensor for receiving said transmitted infrared signal, and output means, comprising amplifying means and a loudspeaker, responsive to an output signal of the infrared sensor to reproduce said audio signal as sound.

In accordance with a preferred embodiment of this invention described below, a wireless loudspeaker unit and an electrical power distribution track are provided, the wireless loudspeaker unit including connectors or fasteners for electrically and physically engaging with the power distribution track. The wireless loudspeaker unit includes sensors for receiving an infrared signal and circuitry for processing the wireless signal so as to drive a loudspeaker to produce an audio output in accordance with received infrared signals.

Embodiments of the invention seek to provide: elimination of the unsightly power cords which ordinary types of wireless loudspeaker system require; and/or elimination of batteries generally used as the power source for internal circuitry of wireless loudspeaker systems and thus, the expense associated therewith; and/or the provision of means for supporting a wireless loudspeaker in a desired operating position for desired sound coverage of a listening area.

The preferred embodiment of the invention described below seeks to incorporate the advantages of an electrical power distribution track such as that commonly used in popular track lighting systems into a wireless loudspeaker system, for instance a wireless high fidelity audio loudspeaker system.

The preferred embodiment comprises an internally amplified high fidelity audio loudspeaker system in which a loudspeaker unit is mounted to and supported in a desired operating position by a power distribution track, power necessary for the operation of internal circuitry of the loudspeaker unit being provided via the power distribution track.

The invention will now be further described, by way of illustrative and non-limiting example, with reference to the accompanying drawings, in which:
FIG. 1 is an illustration of a loudspeaker system in accordance with a preferred embodiment of the invention as incorporated in a typical high fidelity audio system;
FIG. 2 is an illustration of the preferred embodiment; and
FIG. 3 is a block diagram showing an exemplary form of the internal components and circuitry of the preferred embodiment.

The invention is described herein by way of illustrative example in the context of a high fidelity audio loudspeaker system used in a high fidelity audio system. Those who are skilled in the art will appreciate that the invention is not limited to use only in such an audio system and that the invention may in fact be used in conjunction with a variety of consumer, commercial and industrial audio systems, including but not limited to public address and intercom systems.

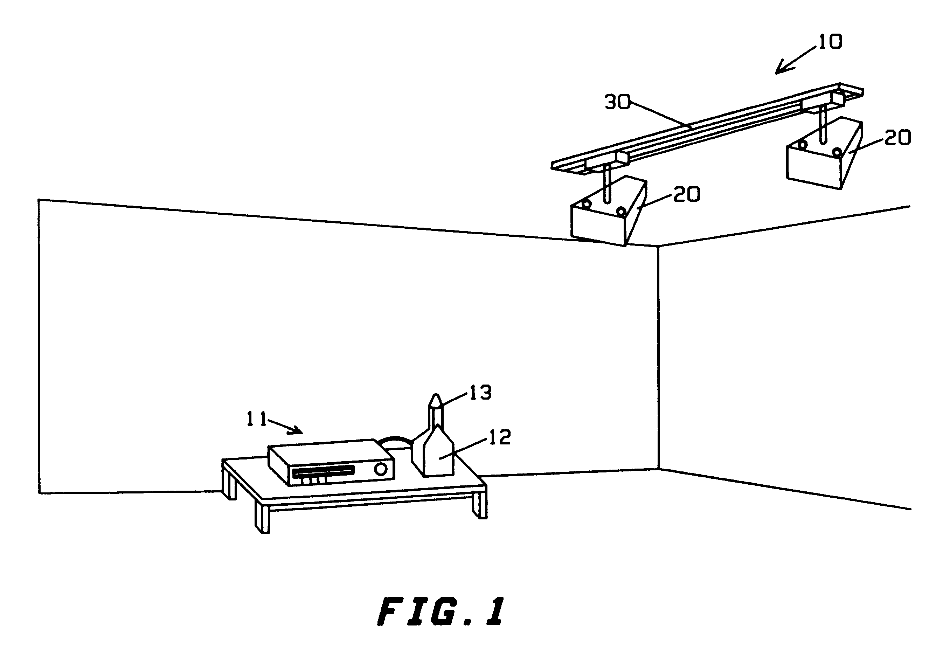

FIG. 1 illustrates a loudspeaker system 10 in accordance with a preferred embodiment of the invention applied to a typical high fidelity audio system wherein there is provided an audio amplifier 11, an infrared modulator 12 and infrared transmitter, or emitter, 13. The audio output of audio amplifier 11 is fed to infrared modulator 12 wherein the audio signal is processed and converted into an infrared signal which is then broadcast to the loudspeaker unit 20 via emitter 13. Loudspeaker unit 20 receives, internally processes and amplifies the received infrared signal so as to drive a loudspeaker diaphragm to produce an audio output to the listening area in accordance with the signal output from audio amplifier 11. The audio amplifier may be for example, a stereo receiver and audio signals may originate, for example, from such sources as a CD player, a radio tuner, tape deck, a DAT machine, a television tuner, or a phonograph, etc.

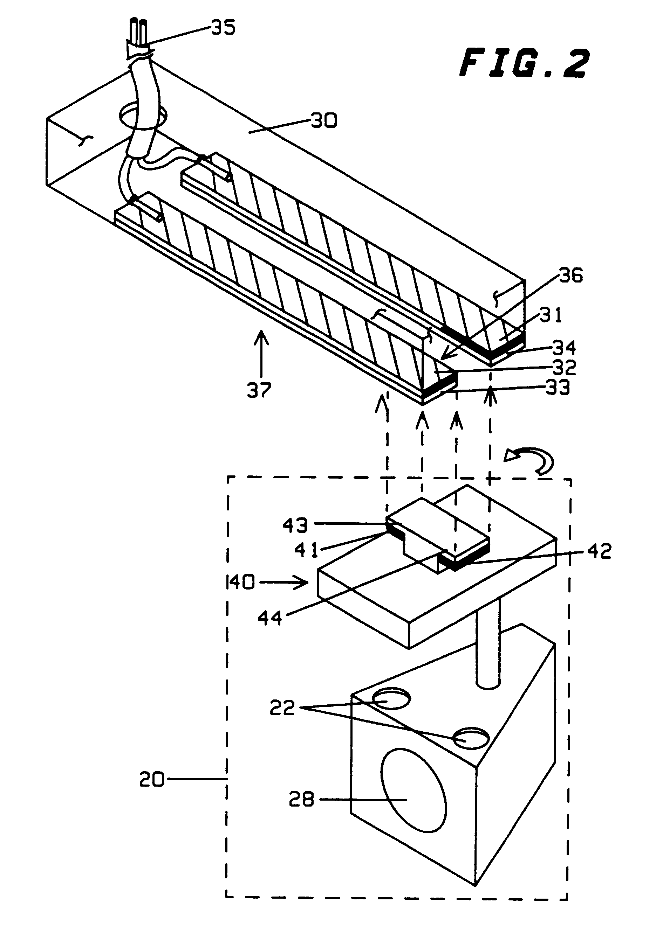

Referring to FIG. 2, the preferred embodiment of the present invention 10 is shown. It will be understood that the present invention is not limited to the exemplary packaging shown herein and may in fact be packaged in a wide variety of manners. Loudspeaker unit 20 is connected to a power distribution track 30 via a connector 40. Power distribution track 30 includes electrical conductors 31 and 32 which are located on the interior surface of track flanges 33 and 34 and are electrically connected to a standard household AC power supply via electrical wires 35. Connector 40 includes electrical contacts 41 and 42 which are located on the downward surfaces of flanges 43 and 44. Attachment of speaker unit 20 to power distribution track 30 is similar to the attachment of track lighting fixtures to a power distribution track, as in many of the popular track lighting systems such as the Lightolier LYTESPAN. At a desired point along the length of power distribution track 30, connector 40 of loudspeaker unit 20 is inserted into channel 36. Connector 40 is then rotated in a plane parallel to the downward surface 37 of power distribution track 30 until connector 40 and power distribution track 30 physically engage with each other so as to cause electrical contacts 41 and 42 to become physically and electrically connected with electrical conductors 31 and 32. It is via the electrical connection of electrical contacts 41 and 42 with electrical conductors 31 and 32 that electrical power is supplied to the internal circuitry of speaker unit 20. Once connector 40 is securely engaged with power distribution track 30, loudspeaker unit 20 is supported in position by power distribution track 30. Connector 40 may be modified in a number of ways which would allow it to mechanically attach to power distribution track 30. Examples of this are shown and described by U.S. Patent No. 3,894,781 to Donato and U.S. Patent No. 2,977,566 to Neuman.

It will be recognized that the arrangement and form of the electrical conductors 31 and 32 is not limited to that shown in FIG. 2. These electrical conductors may be arranged in a variety of locations on the power distribution track and are not limited to placement on opposite sides of a central channel of a power distribution track. These electrical conductors may also take other forms including, for example, electrical wire, electrical contacts or electrically conductive strips. Further, it is not necessary that the electrical conductors 31 and 32 span from one end of the power distribution track to the other; including all points in between. These electrical conductors may be arranged, for example, at only a specific point or points along the power distribution track and not at all points between the two ends of the span of power distribution track.

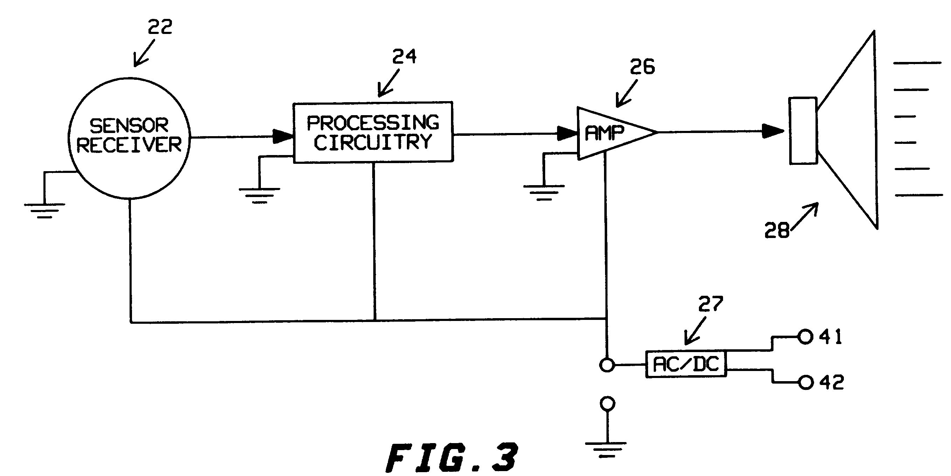

FIG. 3 is a block diagram which shows the electrical elements of one embodiment of the present invention. Loudspeaker unit 20 includes a wireless signal sensor 22, conversion and processing circuitry 24, audio amplifier 26, and loudspeaker 28 . Wireless signal sensor 22 is a sensor responsive to infrared signals. Power for operating the internal circuitry of loudspeaker unit 20 is provided via the connection of electrical contacts 41 and 42 with electrical conductors 31 and 32 of the power distribution track 30. As shown, loudspeaker unit 20 may include AC to DC conversion circuitry 27 which converts standard alternating current or AC power into a direct current or DC power source to power the internal circuitry thereof. Wireless signal sensor 22, receives wireless signals from a wireless transmitter or emitter 13. These wireless signals are then converted back into an electrical signal by conversion and processing circuitry 24. The output of conversion and processing circuitry 24 is then fed to an audio amplifier 26 which increases the audio signal to a level sufficient to drive loudspeaker 28 to produce an audible output at a desired audible sound pressure level.

With regard to power distribution track 30 described herein, it will be recognized that this type of track is not limited only to a straight elongated form but can be, for example, curved. It will also be recognized that electrical conductors 31 and 32 may be, for example, electrically conductive wiring, strips or contact terminals. Further while the preferred embodiment shows electrical conductors aligned on each side of a central channel, it will be recognized that these electrical conductors may be arranged on the power distribution track in a variety of manners including, for example, both conductors being aligned on one side of a central channel. Further, it will be recognized that where the actual body of a power distribution track is made of electrically conductive material, the body of the electrical power distribution track may be utilized as an electrical conductor. It will also be recognized that power distribution track 30 may be modified to include multiple sets of electrical conductors to provide for distribution of electrical power on multiple separate circuits. It is also possible for a power distribution track to have only one point at which electrical contact with the electrical conductors 31 and 32 may be made. Those skilled in the art will also recognize that the structure of the power distribution track 30 need not be limited to having a single centrally located channel but may be modified to have a single channel, or more than one channel, which is or are arranged on the power distribution track in other than a centrally located manner. It will also be recognized that the power distribution track 30 may be designed to include no channel at all.

Although the primary use of the present invention has been described in the context of a high fidelity audio loudspeaker system, it will be recognized that the present invention may be used in a variety of other applications including, but not limited to, commercial or industrial public address systems or intercoms. Further, it will be recognized that loudspeaker unit 20 may be modified to include, for example, such devices as a radio or television tuner, a video display, a video camera, a still camera, a magnetic tape player or recorder, or an optical or magneto-optical disk player or recorder. It will also be recognized that the internal circuitry of loudspeaker unit 20 may be modified to allow for either wired or wireless remote control of such things as audio amplifier gain, or in the case of a loudspeaker unit modified to include, for example, a device such as a radio or television tuner, video display, magnetic tape player or recorder, or an optical or magneto optical disk player or recorder, the functions of these devices may also be controlled by either wireless or wired remote means. Further, electrical power for the operation of the circuitry of a radio or television tuner, video display, magnetic tape player or recorder, optical disk or magneto optical disk player or recorder which may be included in loudspeaker unit 20, may be provided via power distribution track 30.

## Claims

1. A loudspeaker system comprising:
a modulator/transmitter (12, 13) for receiving an audio signal from an audio signal source, converting the audio signal into an infrared signal and transmitting the infrared signal;
a power distribution track (30) comprising electrical conductors (31, 32); and
a loudspeaker unit (20);
the loudspeaker unit (20) having a connector (40) with electrical contacts (41, 42), which connector(40) can be rotated with respect to the track (30) at a desired position along the track to mechanically engage the loudspeaker unit (20) with the track, and so support the loudspeaker unit (20) in position, and also to electrically engage the electrical contacts (41,42) of the loudspeaker unit with the electrical conductors (31,32) of the track whereby the loudspeaker unit can be supplied with electrical power by the track; and
the loudspeaker unit (20) also having an infrared sensor (22) for receiving said transmitted infrared signal, and output means (24, 26, 28), comprising amplifying means (26) and a loudspeaker (28), responsive to an output signal of the infrared sensor (22) to reproduce said audio signal as sound.

2. A loudspeaker system according to claim 1, wherein the electrical conductors (31, 32) of the track (30) are elongate and said mechanical and electrical engagement can be effected at any desired position along the electrical conductors (31, 32) of the track.

3. A loudspeaker system according to claim 1 or claim 2, wherein the track (30) has a channel (36) into which said connector (40) can be inserted when in a predetermined orientation with respect to the track, said mechanical and electrical engagement being effected by rotation of said connector (40), with respect to the track. away from said predetermined orientation.

4. A loudspeaker system according to claim 3, wherein the track (30) comprises flanges (33,34) at the sides of the channel (36) and the electrical conductors (31, 32) of the track are on interior surfaces of the flanges.

5. A loudspeaker system according to claim 4, wherein said connector (40) comprises flanges (43, 44) and the electrical contacts (41, 42) of said connector (40) are on surfaces of said flanges (43,44) that engage with said interior surfaces of the flanges (33, 34) of the track (30) as said connector (40) is rotated, with respect to the track, away from said predetermined orientation.

6. A loudspeaker system according to any one of claims 1 to 5, wherein the track (30) is straight.

7. A loudspeaker system according to any one of claims 1 to 5, wherein the track (30) is curved.

8. A loudspeaker system according to any one of the preceding claims, wherein the loudspeaker unit (20) comprises a housing enclosing the amplifying means (26), the loudspeaker (28) being attached to the housing.

9. A loudspeaker system according to claim 8, wherein the housing comprises a video display.

10. A loudspeaker system according to claim 8, wherein the housing comprises a radio tuner.

11. A loudspeaker system according to claim 8, wherein the housing comprises a television tuner.

12. A loudspeaker system according to claim 8, wherein the housing comprises an optical disk recorder or player.

13. A loudspeaker system according to any one of the preceding claims, wherein the amplifying means (26) is connected to be supplied with electrical power received via the track (30).

14. A loudspeaker system according to any one of the preceding claims, wherein the loudspeaker unit (20) comprises circuitry (27) for converting AC power received from the track (30) into DC power.

15. A loudspeaker system according to any one of the preceding claims, wherein said transmitted infrared signal comprises control information.

16. A loudspeaker system according to any one of the preceding claims, wherein said modulator/transmitter (12, 13) is connected to a said audio signal source (11), said source being an audio amplifier.

17. A loudspeaker system according to any one of the preceding claims, comprising a pair of said loudspeaker units (20).

## Patentansprüche

1. Lautsprechersystem, welches umfaßt:
einen Modulator/Sender (12, 13), um ein Audiosigal von einer Audiosignalquelle zu empfangen, das Audiosignal in ein Infrarotsignal umzusetzen und das Infrarotsignal zu senden;
eine Spannungsverteilungsschiene (30), die elektrische Leiter (31, 32) umfaßt; und
eine Lautsprechereinheit (20);
wobei die Lautsprechereinheit (20) einen Verbinder (40) mit elektrischen Kontakten (41, 42) hat, wobei der Verbinder (40) in bezug auf die Schiene (30) bei einer gewünschten Position längs der Schiene gedreht werden kann, damit die Lautsprechereinheit (20) mit der Schiene mechanische in Eingriff kommt, und um so die Lautsprechereinheit (20) lagerichtig zu lagern, und um außerdem die elektrischen Kontakte (41, 42) der Lautsprechereinheit mit den elektrischen Kontakten (31, 32) der Schiene elektrisch zu verbinden, wodurch die Lautsprechereinheit mit elektrischer Spannung durch die Schiene beliefert werden kann; und
die Lautsprechereinheit (20) außerdem einen Infrarotsensor (22) hat, um das gesendete Infrarotsignal zu empfangen, und eine Ausgabeeinrichtung (24, 26, 28), die einen Verstärker (26) und einen Lautsprecher (28) umfaßt, die auf ein Ausgangssignal des Infrarotsensors (22) ansprechen, um das Audiosignal als Ton zu reproduzieren.

2. Lautsprechersystem nach Anspruch 1, wobei die elektrischen Leiter (31, 32) der Schiene (30) langgestreckt sind, und die mechanische und elektrische Kopplung an irgendeiner gewünschten Position längs der elektrischen Leiter (31, 32) der Schiene durchgeführt werden kann.

3. Lautsprechersystem nach Anspruch 1 oder 2, wobei die Schiene (30) einen Kanal (36) hat, in den der Verbinder (40) eingeführt werden kann, wenn er in einer bestimmten Orientierung in bezug auf die Schiene ist, wobei die mechanische und elektrische Kopplung durch Drehung des Verbinders (40) in bezug auf die Schiene eg von der vorgegebenen Orientierung durchgeführt wird.

4. Lautsprechersystem nach Anspruch 3, wobei die Schiene (30) Flansche (33, 34) an den Seiten des Kanals (36) umfaßt und die elektrischen Leiter (31, 32) der Schiene auf Innenflächen der Flansche sind.

5. Lautsprechersystem nach Anspruch 4, wobei der Verbinder (40) Flansche (43, 44) umfaßt, und die elektrischen Kontakte (41, 42) des Verbinders (40) auf Flächen der Flansche (43, 44) sind, die mit den Innenflächen der Flansche (33, 34) der Schiene (30) in Eingriff kommen, wenn der Verbinder (40) in bezug auf die Schiene weg von der vorgegebenen Orientierung gedreht wird.

6. Lautsprechersystem nach einem der Ansprüche 1 bis 5, wobei die Schiene (30) gerade ist.

7. Lautsprechersystem nach einem der Ansprüche 1 bis 5, wobei die Schiene (30) gekrümmt ist.

8. Lautsprechersystem nach einem der vorhergehenden Ansprüche, wobei die Lautsprechereinheit (20) ein Gehäuse umfaßt, welches den Verstärker (26) enthält, wobei der Lautsprecher (28) am Gehäuse befestigt ist.

9. Lautsprechersystem nach Anspruch 8, wobei das Gehäuse eine Videoanzeige besitzt.

10. Lautsprechersystem nach Anspruch 8, wobei das Gehäuse ein Rundfunkabstimmgerät besitzt.

11. Lautsprechersystem nach Anspruch 8, wobei das Gehäuse ein Fernsehabstimmgerät besitzt.

12. Lautsprechersystem nach Anspruch 8, wobei das Gehäuse ein optisches Plattenaufzeichnungs- oder Wiedergabegerät besitzt.

13. Lautsprechersystem nach einem der vorhergehenden Ansprüche, wobei der Verstärker (26) so geschaltet ist, daß er mit elektrischer Spannung, die über die Schiene (30) erhalten wird, beliefert wird.

14. Lautsprechersystem nach einem der vorhergehenden Ansprüche, wobei die Lautsprechereinheit (20) eine Schaltung (27) umfaßt, um eine Wechselspannung, die von der Schiene (30) erhalten wird, in eine Gleichspannung umzusetzen.

15. Lautsprechersystem nach einem der vorhergehenden Ansprüche, wobei das gesendete Infrarotsignal eine Steuerinformation umfaßt.

16. Lautsprechersystem nach einem der vorhergehenden Ansprüche, wobei der Modulator/Sender (12, 13) mit einer Audiosignalquelle (11) verbunden ist, wobei die Quelle ein Audioverstärker ist.

17. Lautsprechersystem nach einem der vorhergehenden Ansprüche, welches ein Paar von Lautsprechereinheiten (20) umfaßt.

## Revendications

1. Système de haut-parleur, comprenant :
un modulateur/émetteur (12, 13) pour recevoir un signal audio en provenance d'une source de signal audio, pour transformer le signal audio en un substrat infrarouge et pour émettre le signal infrarouge ;
un rail de distribution de courant (30) comprenant des conducteurs électriques (31, 32) ; et
une unité formant haut-parleur (20) ;
l'unité formant haut-parleur (20) ayant un connecteur (40) muni de contacts électriques (41, 42), lequel connecteur (40) peut être tourné par rapport au rail (30) à une position souhaitée le long du rail pour mettre mécaniquement en prise l'unité formant haut-parleur (20) avec le rail, et pour supporter ainsi en position l'unité formant haut-parleur (20), et également pour mettre électriquement en prise les contacts électriques (41, 42) de l'unité formant haut-parleur avec les conducteurs électriques (31, 32) du rail de sorte que l'on peut alimenter l'unité formant haut-parleur par un courant électrique en provenance du rail ; et
l'unité formant haut-parleur (20) ayant également un capteur infrarouge (22) pour recevoir ledit signal infrarouge émis, et des moyens de sortie (24, 26, 28), comprenant des moyens d'amplification (26) et un haut-parleur (28), sensibles à un signal de sortie du capteur infrarouge (22) pour reproduire ledit signal audio en tant que son.

2. Système de haut-parleur selon la revendication 1, dans lequel les conducteurs électriques (31, 32) du rail (30) sont allongés et dans lequel on peut effectuer ladite mise en prise mécanique et électrique à une quelconque position souhaitée le long des conducteurs électriques (31, 32) du rail.

3. Système de haut-parleur selon la revendication 1 ou la revendication 2, dans lequel le rail (30) possède un profilé (36) dans lequel on peut insérer ledit connecteur (40) quand il a une orientation prédéterminée par rapport au rail, ladite mise en prise mécanique et électrique étant effectuée par la rotation dudit connecteur (40), par rapport au rail, différemment de ladite orientation prédéterminée.

4. Système de haut-parleur selon la revendication 3, dans lequel le rail (30) comprend des flancs (33, 34) au niveau des côtés du profilé (36) et les conducteurs électriques (31, 32) du rail sont sur l'intérieur des flancs.

5. Système de haut-parleur selon la revendication 4, dans lequel ledit connecteur (40) comprend des flancs (43, 44) et les contacts électriques (41, 42) dudit connecteur (40) sont sur des surfaces desdits flancs (43, 44) qui mettent en prise lesdites surfaces intérieures des flancs (33, 34) du rail (30) lorsque l'on tourne ledit connecteur (40), par rapport au rail, différemment de ladite orientation prédéterminée.

6. Système de haut-parleur selon l'une quelconque des revendications 1 à 5, dans lequel le rail (30) est droit.

7. Système de haut-parleur selon l'une quelconque des revendications 1 à 5, dans lequel le rail (30) est incurvé.

8. Système de haut-parleur selon l'une quelconque des revendications précédentes, dans lequel l'unité formant haut-parleur (20) comprend un logement englobant les moyens d'amplification (26), le haut-parleur (28) étant fixé au logement.

9. Système de haut-parleur selon la revendication 8, dans lequel le logement comprend un dispositif d'affichage vidéo.

10. Système de haut-parleur selon la revendication 8, dans lequel le logement comprend un syntoniseur radio.

11. Système de haut-parleur selon la revendication 8, dans lequel le logement comprend un syntoniseur de télévision.

12. Système de haut-parleur selon la revendication 8, dans lequel le logement comprend un lecteur ou un enregistreur de disque optique.

13. Système de haut-parleur selon l'une quelconque des revendications précédentes, dans lequel les moyens d'amplification (26) sont reliés pour être alimentés par un courant électrique reçu par l'intermédiaire du rail (30).

14. Système de haut-parleur selon l'une quelconque des revendications précédentes, dans lequel l'unité formant haut-parleur (20) comprend des circuits (27) pour transformer un courant alternatif reçu en provenance du rail (30) en un courant continu.

15. Système de haut-parleur selon l'une quelconque des revendications précédentes, dans lequel ledit signal infrarouge émis comprend des informations de commande.

16. Système de haut-parleur selon l'une quelconque des revendications précédentes, dans lequel ledit modulateur/émetteur (12, 13) est relié à ladite source de signal audio (11), ladite source étant un amplificateur audio.

17. Système de haut-parleur selon l'une quelconque des revendications précédentes, comprenant un couple de dites unités formant haut-parleurs (20).
